# EUROPÄISCHE PATENTSCHRIFT

(11) **EP 4 070 006 B1**
(45) Veröffentlichungstag und Bekanntmachung des Hinweises auf die Patenterteilung: **15.01.2025**
(21) Anmeldenummer: 20819698.0
(22) Anmeldetag: 02.12.2020
(51) Int. Cl.: F16N 3/12

(54) **FETTPRESSE**
GREASE GUN
PISTOLET GRAISSEUR

(30) Priorität: 03.12.2019 DE 102019132773
(43) Veröffentlichungstag der Anmeldung: 12.10.2022
(73) Patentinhaber: Pressol - Schmiergeräte Gesellschaft mit beschränkter Haftung, 79423 Heitersheim (DE)
(72) Erfinder: SCHLENKER, Rudolf, 6353 Weggis (CH)
(74) Vertreter: Mertzlufft-Paufler, Cornelius
(86) Internationale Anmeldenummer: PCT/EP2020/084294
(87) Internationale Veröffentlichungsnummer: WO 2021/110756

(56) Entgegenhaltungen:
- EP-A1- 3 620 709
- DE-U1- 202016 100 131
- DE-U1- 202016 102 544

## Beschreibung

Die Erfindung betrifft eine Fettpresse mit einem Schraubanschluss zum Anschluss einer Schmierstoff beinhaltenden Schraubkartusche, der in einen Fördermechanismus der Fettpresse mündet.

Aus der Druckschrift DE 20 2016 102 544 U1 ist eine Fettpistole mit einem Körper und mit einer an einem Ende des Körpers angeschlossenen Zuleitung vorbekannt. Die Fettpistole umfasst einen mit der Zuleitung verbundenen Anschluss, der ein Innengewinde aufweist. In das Innengewinde des Anschlusses können Reduzieradapter mit unterschiedlichen Innengewindedurchmessern eingeschraubt werden, um Fettkartuschen mit unterschiedlichen Anschlussgewindedurchmessern mit dem Innengewinde des Anschlusses der Fettpistole zu verschrauben.

Fettpressen werden dazu verwendet, Schmierstoff, insbesondere Schmierfett, an eine Schierstelle, z.B. an eine Lagerstelle zu drücken. Hierfür kann die Fettpresse beispielsweise an einen Schmiernippel angeschlossen werden, über den der aus der Fettpresse geförderte Schmierstoff dann an die zu schmierende Schmierstelle gelangt.

Aufgabe der Erfindung ist es, eine Fettpresse der eingangs genannten Art mit verbesserten Gebrauchseigenschaften bereitzustellen.

Zur Lösung der Aufgabe wird eine Fettpresse mit den Merkmalen des unabhängigen Anspruchs vorgeschlagen. Insbesondere wird zur Lösung der Aufgabe eine Fettpresse der eingangs genannten Art vorgeschlagen, die dadurch gekennzeichnet ist, dass der Schraubanschluss zumindest zwei unterschiedliche Anschlussgewinde zum Anschluss von Schraubkartuschen mit unterschiedlichen Gegengewinden umfasst. Auf diese Weise ist es möglich, in und dieselbe Fettpresse mit unterschiedlichen Schraubkartuschen zu bestücken und zu verwenden. Somit müssen nicht mehr zwei unterschiedliche Fettpressen vorgehalten, um Schraubkartuschen unterschiedlichen Gewindetyps zu nutzen.

Die Fettpresse wird über ihren Schraubanschluss mit einer Schraubkartusche, die Schmierstoff enthält, verbunden. Bei Betätigung der Fettpresse wird der Schmierstoff aus der Schraubkartusche ausgefördert und über eine Abgabeöffnung der Fettpresse einer Schmierstelle zugeführt. Dabei kann die Schraubkartusche wahlweise mit einem der zumindest zwei unterschiedlichen Anschlussgewinden verschraubt werden.

Die zwei Anschlussgewinde der Fettpresse können unterschiedliche Durchmesser aufweisen. So können Schraubkartuschen mit unterschiedlich dimensionierten Gegengewinden an dieselbe Fettpresse angeschlossen werden.

Üblicherweise sind die Schraubkartuschen mit Außengewinden versehen. Bevorzugt sind die Anschlussgewinde der Fettpresse daher als Innengewinde ausgebildet. Auf diese Weise kann eine Schraubkartusche, die ein als Außengewinde ausgebildetes Gegengewinde aufweist, zuverlässig in eines der zwei Anschlussgewinde eingeschraubt werden. Die Innengewinde der Fettpresse können dabei so ausgebildet sein, dass sie Gewindestutzen der Schraubkartuschen, an denen die Gegengewinde ausgebildet sind, übergreifen, wenn die Schraubkartuschen ordnungsgemäß mit der Fettpresse verbunden sind.

Die zumindest zwei Anschlussgewinde können ineinander und insbesondere konzentrisch zueinander angeordnet sein. Ferner können sie eine Austrittsöffnung des Schraubanschlusses in eine Förderverbindung des Fördermechanismus hin zu einer Abgabeöffnung der Fettpresse, vorzugsweise konzentrisch, umgeben. Auf diese Weise wird sichergestellt, dass unabhängig davon, über welches der zumindest zwei Anschlussgewinde der Fettpresse eine Schraubkartusche an die Fettpresse angeschlossen ist, Schmierstoff aus der Schraubkartusche in den Fördermechanismus der Fettpresse gelangen kann.

Der Schraubanschluss der Fettpresse weist erfindungsgemäß zumindest zwei Gewindestutzen auf. An jedem der Gewindestutzen ist eines der zumindest zwei Anschlussgewinde angeordnet oder ausgebildet. Vorzugsweise sind die zumindest zwei Gewindestutzen ineinander angeordnet. Besonders bevorzugt sind die zumindest zwei Gewindestutzen konzentrisch zueinander angeordnet. Ferner können die Gewindestutzen eine, beispielsweise die bereits zuvor erwähnte Austrittsöffnung des Schraubanschlusses, durch den Schmierstoff in den Fördermechanismus der Fettpresse gelangen kann, konzentrisch umgeben.

Bevorzugt sind die zumindest zwei Anschlussgewinde der Fettpresse so ineinander verschachtelt, dass sie kartuschenseitig bündig abschließen. Ferner können freie, kartuschenseitige Stirnseiten der zumindest zwei Anschlussgewinde in einer Ebene gemeinsamen angeordnet sein. So können die zumindest zwei unterschiedlichen Anschlussgewinde des Schraubanschlusses der Fettpresse zugänglich für die Gegengewinde von unterschiedlichen Schraubkartuschentypen sein. Dies kann den zuverlässigen Anschluss von Kartuschen an die Fettpresse begünstigen.

Bei einer Ausführungsform der Fettpresse ist diese als Einhebelfettpresse ausgebildet. Bei einer anderen Ausführungsform der Fettpresse ist diese als Zweihebelfettpresse ausgebildet.

Die Erfindung wird nun anhand eines Ausführungsbeispiels näher beschrieben, ist aber nicht auf dieses Ausführungsbeispiel beschränkt. Weitere Ausführungsbeispiele ergeben sich durch Kombination der Merkmale einzelner oder mehrerer Schutzansprüche untereinander und/oder in Kombination einzelner oder mehrerer Merkmale des Ausführungsbeispiels. Es zeigen:

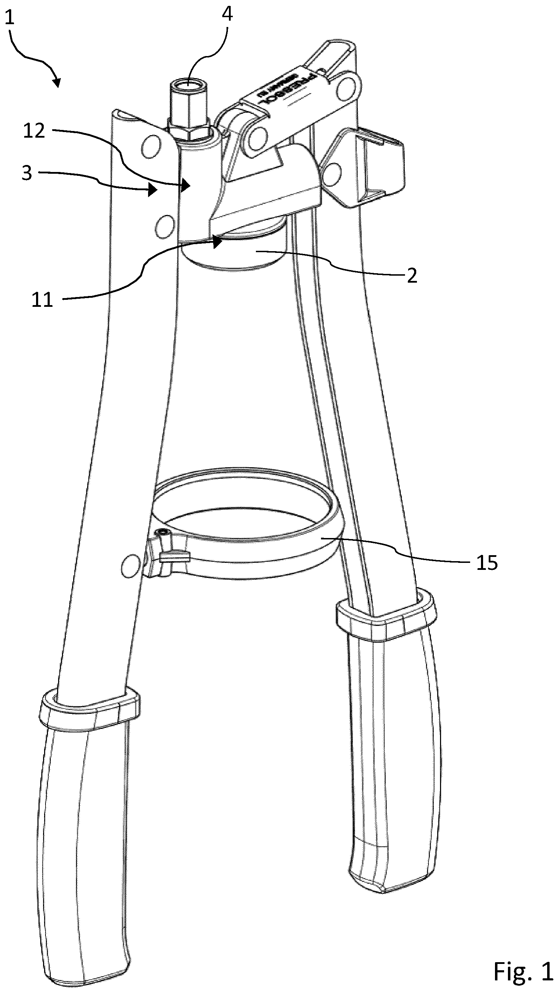

- Fig. 1: eine perspektivische Seitenansicht einer Fettpresse,
- Fig. 2: eine teilausgebrochene Seitenansicht der Fettpresse aus Figur 1 mit einer an ein inneres Anschlussgewinde von zwei Anschlussgewinden der Fettpresse angeschlossenen Schraubkartusche, sowie
- Fig. 3: eine teilausgebrochen Seitenansicht der Fettpresse aus den Figuren 1 und 2 mit einer an ein äußeres Anschlussgewinde von zwei Anschlussgewinden der Fettpresse angeschlossenen Schraubkartusche.

Sämtliche Figuren zeigen eine im Ganzen mit 1 bezeichnete Fettpresse. Die Fettpresse 1 weist einen Schraubanschluss 2 zum Anschluss einer Schraubkartusche auf. Der Schraubanschluss 2 mündet in einen Fördermechanismus 3 der Fettpresse 1. Mithilfe des Fördermechanismus 3 lässt sich Schmierstoff aus einer Abgabeöffnung 4 der Fettpresse 1 ausfördern und einer Schmierstelle zuführen.

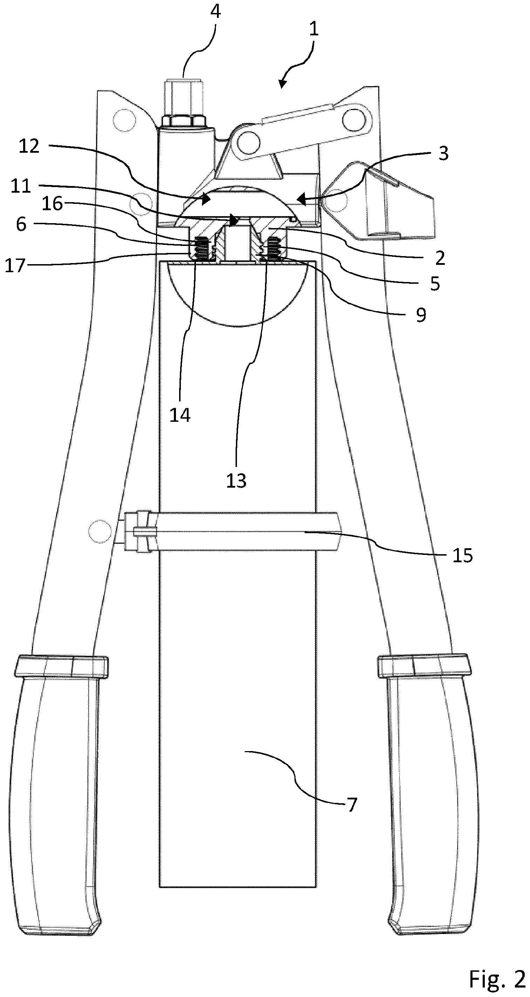

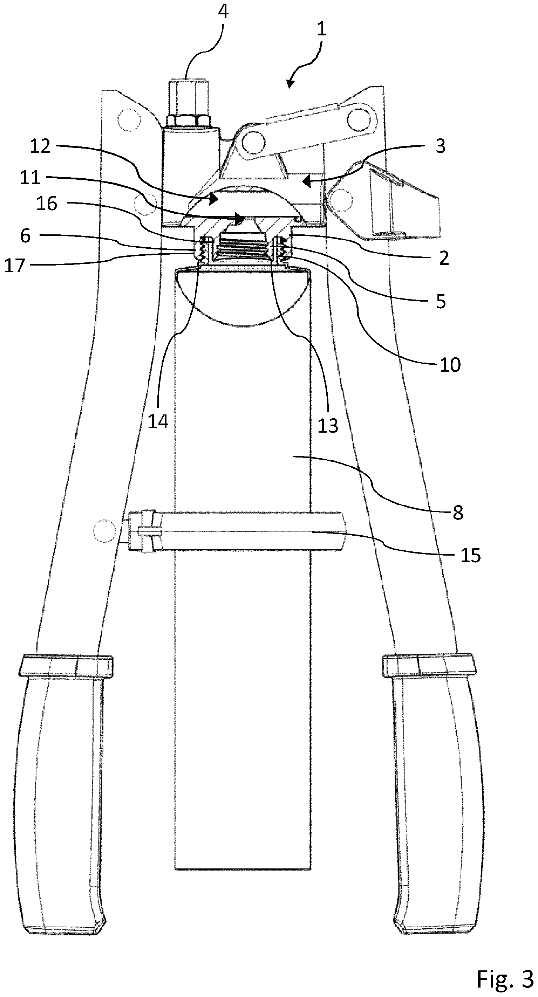

Ein Vergleich der Figuren 2 und 3 macht deutlich, dass der Schraubanschluss 2 insgesamt zwei unterschiedliche Anschlussgewinde 5 und 6 zum Anschluss von Schraubkartuschen 7 und 8 mit unterschiedlichen Gegengewinden 9 und 10 umfasst.

Die beiden Anschlussgewinde 5 und 6 unterscheiden sich durch ihre Durchmesser und sind als Innengewinde ausgebildet. Die Gegengewinde 9 und 10 der beiden Schraubkartuschen 7 und 8 sind dementsprechend als Außengewinde ausgebildet. Figur 2 zeigt die Schraubkartuschen 7 mit dem kleineren Gegengewinde 9 in dem inneren Anschlussgewinde 5 mit dem geringeren Durchmesser. Figur 3 zeigt die Schraubkartusche 8 mit ihrem größeren Gegengewinde 10 im größeren Anschlussgewinde 6 der Fettpresse 1.

Die teilausgebrochenen Darstellungen der Fettpresse 1 gemäß den Figuren 2 und 3 zeigen, dass die beiden Anschlussgewinde 5 und 6 ineinander und konzentrisch zueinander und konzentrisch zu einer Austrittsöffnung 11 des Schraubanschlusses 2 der Fettpresse 1 angeordnet sind. Die Austrittsöffnung 11 des Schraubanschlusses 2 mündet in eine Förderverbindung 12. Über die Förderverbindung 12 ist die Austrittsöffnung 11 des Schraubanschlusses 2 mit der Abgabeöffnung 4 der Fettpresse 1 verbunden.

Der Schraubanschluss 2 der Fettpresse 1 weist zwei Gewindestutzen 16 und 17 auf. Der Gewindestutzen 16 ist ein innerer Gewindestutzen und weist das innere Anschlussgewinde 5 auf. Der Gewindestutzen 17 ist ein äußerer Gewindestutzen und weist das äußere Anschlussgewinde 6 der beiden Anschlussgewinde 5 und 6 auf. Der innere Gewindestutzen 16 ist innerhalb des äußeren Gewindestutzens 17 angeordnet. An jedem der Gewindestutzen 16 und 17 ist somit jeweils eines der zwei Anschlussgewinde 5 und 6 ausgebildet. Die beiden Gewindestutzen 16 und 17 sind konzentrisch zueinander angeordnet. Ferner umgeben die Gewindestutzen 16 und 17 die bereits zuvor erwähnte Austrittsöffnung 11 des Schraubanschlusses 2 konzentrisch. Durch die Austrittsöffnung 11 gelangt der Schmierstoff, in der Regel Schmierfett, bei Betätigung der Fettpresse 1 aus der jeweils eingeschraubten Schraubkartusche 7 oder 8 in den Fördermechanismus 3 der Fettpresse 1 und wird schließlich über die Abgabeöffnung 4 abgegeben.

Die beiden Anschlussgewinde 5 und 6 und die beiden Gewindestutzen 16 und 17 sind so ineinander verschachtelt, dass sie kartuschenseitig bündig abschließen. So liegen freie, kartuschenseitige Stirnseiten 13 und 14 der beiden Anschlussgewinde 5 und 6 bzw. der beiden Gewindestutzen 16 und 17 in einer gemeinsamen gedachte Ebene.

Die in den Figuren gezeigte Fettpresse 1 ist als Zweihebelfettpresse ausgebildet. An einem der beiden Hebel weist die Fettpresse 1 einen Halter 15 für die Schraubkartuschen 7 und 8 auf.

Die Erfindung befasst sich mit Verbesserungen auf dem technischen Gebiet der Fettpressen. Um die Handhabung einer Fettpresse 1 zu verbessern, weist diese einen Schraubanschluss 2 zum Anschluss von Schraubkartuschen 7 und 8 auf. Der Schraubanschluss 2 umfasst zumindest zwei unterschiedliche Anschlussgewinde 5 und 6 zum Anschluss von Schraubkartuschen 7 und 8, die unterschiedlichen Gegengewinde 9 und 10 aufweisen.

### Bezugszeichenliste

- 1: Fettpresse
- 2: Schraubanschluss
- 3: Fördermechanismus
- 4: Abgabeöffnung
- 5: inneres Anschlussgewinde
- 6: äußeres Anschlussgewinde
- 7: Schraubkartusche
- 8: Schraubkartusche
- 9: Gegengewinde an 7
- 10: Gegengewinde an 8
- 11: Austrittsöffnung von 2
- 12: Förderverbindung
- 13: Stirnseite von 5
- 14: Stirnseite von 6
- 15: Halter
- 16: innerer Gewindestutzen
- 17: äußerer Gewindestutzen

## Patentansprüche

1. Fettpresse (1) mit einem Schraubanschluss (2) zum Anschluss einer Schraubkartusche (7,8), wobei der Schraubanschluss (2) in einen Fördermechanismus (3) der Fettpresse (1) mündet, **dadurch gekennzeichnet, dass** der Schraubanschluss (2) zumindest zwei unterschiedliche Anschlussgewinde (5,6) zum Anschluss von Schraubkartuschen (7,8) mit unterschiedlichen Gegengewinden (9,10) umfasst, wobei der Schraubanschluss (2) zumindest zwei Gewindestutzen (16, 17) aufweist, an denen jeweils eines der zumindest zwei Anschlussgewinde (5,6) angeordnet oder ausgebildet ist.

2. Fettpresse (1) nach Anspruch 1, **dadurch gekennzeichnet, dass** die zumindest zwei Anschlussgewinde (5,6) unterschiedliche Durchmesser aufweisen.

3. Fettpresse (1) nach einem der vorherigen Ansprüche, **dadurch gekennzeichnet, dass** die zumindest zwei Anschlussgewinde (5,6) als Innengewinde ausgebildet sind.

4. Fettpresse (1) nach einem der vorherigen Ansprüche, **dadurch gekennzeichnet, dass** die zumindest zwei Anschlussgewinde (5,6) ineinander, insbesondere konzentrisch zueinander, angeordnet sind und/oder eine Austrittsöffnung (11) des Schraubanschlusses (2) in eine Förderverbindung (12) des Fördermechanismus (3) hin zu einer Abgabeöffnung (4) der Fettpresse (1), vorzugsweise konzentrisch, umgeben.

5. Fettpresse (1) nach einem der vorherigen Ansprüche, wobei die zumindest zwei Gewindestutzen (16,17) ineinander und/oder konzentrisch zueinander angeordnet sind und/oder eine oder die Austrittsöffnung (11) des Schraubanschlusses (2) konzentrisch umgeben.

6. Fettpresse (1) nach einem der vorherigen Ansprüche, **dadurch gekennzeichnet, dass** die zumindest zwei Anschlussgewinde (5,6) so ineinander verschachtelt sind, dass sie kartuschenseitig bündig abschließen und/oder dass freie, kartuschenseitige Stirnseiten (13,14) der zumindest zwei Anschlussgewinde (5,6) in einer gemeinsamen Ebene angeordnet sind.

7. Fettpresse (1) nach einem der vorherigen Ansprüche, **dadurch gekennzeichnet, dass** die Fettpresse (1) als Einhebelfettpresse oder als Zweihebelfettpresse ausgebildet ist.

## Claims

1. Grease gun (1) having a screw connection (2) for connecting a screw cartridge (7, 8), wherein the screw connection (2) opens into a feed mechanism (3) of the grease gun (1), **characterized in that** the screw connection (2) comprises at least two different connection threads (5, 6) for connecting screw cartridges (7, 8) with different mating threads (9, 10), wherein the screw connection (2) has at least two threaded sockets (16, 17), on each of which one of the at least two connection threads (5, 6) is arranged or formed.

2. Grease gun (1) according to claim 1, **characterized in that** the at least two connection threads (5, 6) have different diameters.

3. Grease gun (1) according to one of the preceding claims, **characterized in that** the at least two connection threads (5, 6) are designed as internal threads.

4. Grease gun (1) according to one of the preceding claims, **characterized in that** the at least two connection threads (5, 6) are arranged one inside the other, in particular concentrically to each other, and/or surround an outlet opening (11) of the screw connection (2) into a feed connection (12) of the feed mechanism (3) towards a discharge opening (4) of the grease gun (1), preferably concentrically.

5. Grease gun (1) according to one of the preceding claims, wherein the at least two threaded connections (16, 17) are arranged in one another and/or concentrically to one another and/or concentrically surround one or the outlet opening (11) of the screw connection (2).

6. Grease gun (1) according to one of the preceding claims, **characterized in that** the at least two connection threads (5, 6) are nested in one another in such a way that they terminate flush on the cartridge side and/or **in that** free, cartridge-side end faces (13, 14) of the at least two connection threads (5, 6) are arranged in a common plane.

7. Grease gun (1) according to one of the preceding claims, **characterized in that** the grease gun (1) is designed as a single-lever grease gun or as a double-lever grease gun.

## Revendications

1. Pistolet graisseur (1) muni d'un raccord fileté (2) pour le raccordement à une cartouche vissée (7, 8), dans lequel le raccord fileté (2) débouche dans un mécanisme de transport (3) du pistolet graisseur (1), **caractérisé en ce que** le raccord fileté (2) comporte au moins deux filets de raccordement (5, 6) différents pour le raccordement de cartouches vissées (7, 8) pourvues de filets opposés (9, 10) différents, le raccord fileté (2) comportant au moins deux tubulures filetées (16, 17) sur chacune desquelles un des au moins deux filets de raccordement (5, 6) est disposé ou formé.

2. Pistolet graisseur (1) selon la revendication 1, **caractérisé en ce que** les au moins deux filets de raccordement (5, 6) ont des diamètres différents.

3. Pistolet graisseur (1) selon l'une des revendications précédentes, **caractérisé en ce que** les au moins deux filets de raccordement (5, 6) sont conformés comme des filets intérieurs.

4. Pistolet graisseur (1) selon l'une des revendications précédentes, **caractérisé en ce que** les au moins deux filets de raccordement (5, 6) sont disposés l'un dans l'autre, en particulier concentriques l'un par rapport à l'autre, et/ou entourent, de préférence de façon concentrique, une ouverture de sortie (11) du raccord fileté (2) dans un assemblage de transport (12) du mécanisme de transport (3) menant à une ouverture de distribution (4) du pistolet graisseur (1).

5. Pistolet graisseur (1) selon l'une des revendications précédentes, dans lequel les au moins deux tubulures filetées (16, 17) sont disposées l'une dans l'autre et/ou concentriques l'une par rapport à l'autre et/ou entourent de façon concentrique une ouverture de sortie ou l'ouverture de sortie (11) du raccord fileté (2).

6. Pistolet graisseur (1) selon l'une des revendications précédentes, **caractérisé en ce que** les au moins deux filets de raccordement (5, 6) sont imbriqués l'un dans l'autre de telle façon qu'ils se terminent de niveau du côté de la cartouche et/ou **en ce que** les faces d'extrémité libres (13, 14) du côté de la cartouche des au moins deux filets de raccordement (5, 6) soient disposées dans le même plan.

7. Pistolet graisseur (1) selon l'une des revendications précédentes, **caractérisé en ce que** le pistolet graisseur (1) est conformé comme un pistolet graisseur à un levier ou comme un pistolet graisseur à deux leviers.
